# EUROPEAN PATENT APPLICATION

(11) **EP 4 768 659 A1**
(43) Date of publication of application: **01.07.2026**
(21) Application number: 24943558.7
(22) Date of filing: 30.08.2024
(51) Int. Cl.: D06F 81/04, D06F 81/08, D06F 81/10, D06F 75/08, G01C 19/04, G09F 23/00, D06F 81/00, D06F 75/26

(54) **IRONING SYSTEM**

(30) Priority: 14.06.2024 KR 20240077407; 25.06.2024 KR 20240082383
(71) Applicant: LG Electronics Inc., Yeongdeungpo-gu Seoul 07336 (KR)
(72) Inventor: KANG, Sejin, Seoul 08592 (KR); SUNG, Younghwan, Seoul 08592 (KR); PARK, Sanghyun, Seoul 08592 (KR)
(74) Representative: Vossius & Partner Patentanwälte Rechtsanwälte mbB
(86) International application number: PCT/KR2024/013005
(87) International publication number: WO 2025/258743

(57) **Abstract**

An ironing system of the present invention is characterized by comprising: an ironing board having a pressing surface on which clothes can be pressed; a support body having an upper end coupled to the rear surface of the ironing board so as to support the ironing board; a base part provided at the lower end of the support body so as to be seated on the ground; a water supply part seated on the base part so as to store water; a steam generator spaced apart from the water supply part so as to be provided at the base part, and receiving water from the water supply part so as to generate steam; and an iron connected to the steam generator so as to receive the steam from the steam generator, spraying the steam, and pressing the clothes, wherein the ironing board is coupled to the support body so as to be rotatable up, down, left and right, and includes an operation part provided on the upper surface of the ironing board so as to receive a user's command.

## Description

### [Technical Field]

The present disclosure relates to an ironing system in which an operation part is provided on an ironing board.

### [Background Art]

Clothing made of specific materials such as cotton or linen tends to develop significant wrinkles after washing or after being worn in daily life. In order to repeatedly wear such clothing, ironing is performed.

The most common method of ironing is to place clothing on a blanket laid on the floor or on an ironing board and to press the clothing with an iron held in one hand. However, this method forces a user to sit on the floor or to maintain a crouched posture, thereby causing considerable inconvenience. In addition, since the iron is operated by electric power supplied thereto, ironing must be performed near a wall where an electrical outlet is installed.

Recently, in order to address these issues, ironing systems have been introduced in which an ironing board for placing clothing is raised to the height of the user's waist to allow the user to continuously perform ironing without placing excessive strain on the body.

A conventional ironing system disclosed in International Patent Application Publication No. WO02/090642A1 may include an ironing board having a pressing surface on which clothing is placed, and support legs arranged to support the ironing board.

The ironing board may be formed in a plate shape. The ironing board may include a seating portion on one side on which clothing or an iron may be placed.

The support legs may be arranged to support the ironing board with the ironing board spaced apart from the ground by a predetermined height. The support legs may include a first leg coupled to one side of a lower portion of the ironing board, and a second leg coupled to the lower portion of the ironing board while being spaced apart from the first leg by a predetermined distance. The first leg and the second leg may be rotatably coupled to each other so as to cross each other by a rotation link.

Also, base portions may be provided at free ends of the first leg and the second leg such that the first leg and the second leg may maintain contact with the ground.

The ironing system may further include a supplier configured to supply power or steam to the iron. The supplier may be fixed to one side of the support legs.

The supplier may include a power supply configured to supply power to the iron, and a water tank and a steam supplier provided to supply steam to the iron. The supplier and the iron may be connected by a connection line, such that power and steam may be supplied to the iron.

The ironing system is capable of supporting the ironing board at a predetermined height above the ground through the first leg and the second leg. Accordingly, the user may be allowed to perform ironing in a standing position or without excessively bending the upper body. In addition, since the iron is connected to the supplier to receive power, the user is allowed to place the ironing system in a wide space separated from a wall to perform ironing.

However, in order to use the ironing system, the user must manually separate and deploy the first leg and the second leg from the ironing board, which is inconvenient. For example, the user must unfold the first leg and the second leg while holding the ironing board, which is heavy, or must unfold the first leg and the second leg with the ironing board turned over or stood upright, and then rotate the ironing board, which causes inconvenience.

In addition, since the ironing board, which is much heavier than the support legs, must be disposed above the support legs, it is difficult for the user to install the ironing board. In particular, during installation of the ironing board, the ironing board may topple over, posing a risk of injury to the user.

The conventional ironing system allows the support legs to be attached to or folded relative to the ironing board to reduce volume. Accordingly, the ironing system may be easy to store. However, the ironing system may topple over and be damaged during the storage process. That is, when the supplier is coupled to the support legs, the ironing system may be more likely to topple over. Therefore, the ironing system may inherently fail to guarantee safety.

In addition, since the first leg and the second leg could be arbitrarily folded when moved on the ground, the base portion is designed to provide significant friction. As a result, once the user unfolds the first leg and the second leg from the ironing board, it is difficult to change the position of the ironing system.

Furthermore, since the lower ends of the support legs must remain in contact with the ground, there may be limitations in mobility.

In order to address these issues, ironing systems such as those disclosed in European Patent No. 2,474,661B1 and European Patent No. 2,169,108 have recently been introduced.

Such ironing systems further include a support body to which the ironing board may be attached and fixed. The support body may be arranged to support the ironing board on both a front surface and an upper surface thereof, and may have a sufficiently large cross-sectional area.

Accordingly, when the ironing board is not in use, the ironing board may be fixed to the front surface of the support body as illustrated, and the support body may be prevented from tipping over even without additional measures.

In addition, such ironing systems may include movement wheels installed at lower ends of the support body, such that the installation position may be freely changed at any time.

A method of using such ironing systems will be described below.

Support legs capable of supporting the ironing board are provided at a front portion or a lower portion of the ironing board. The support legs may include a first leg coupled to the ironing board and a second leg spaced apart from the first leg and coupled to the ironing board, wherein the first leg and the second leg may be cross-coupled to each other by the rotation link so as to be movable.

The front surface of the support body may be configured such that a rear end of the ironing board is slidable thereon.

Accordingly, as the support legs move forward, the ironing board may be separated from the support body from an upper end thereof and rotated to be inclined. At the same time, the rear end of the ironing board may be lifted upward with respect to the support legs and slide along the front surface of the support body. Eventually, the ironing board may be seated on the top surface of the support body or coupled to and fixed on an upper portion of the support body. In this manner, the ironing system allows the ironing board to be installed with the support body firmly fixed, thereby ensuring user convenience.

However, the ironing system has a structural limitation in that the user must lift both the support legs and the ironing board at the same time to reattach the ironing board to the support body. That is, after completing ironing, the user must lift the ironing board and the support legs simultaneously in order to store the ironing system.

For example, if the user lacks sufficient strength for lifting the ironing board and the support legs, the ironing board and the support legs may suddenly fall down, posing a risk of injury to the user. In addition, when the ironing board and the support legs are lifted, the center of gravity may abruptly rise, which may cause the support body to tip over.

Further, since the movement wheels of the ironing system are fixed in one direction, the degree of freedom in moving the ironing system is limited.

In addition, the ironing system has a complicated process for deploying and storing the ironing board. Thus, the user must learn and become familiar with the installation procedure, which causes inconvenience.

In order to address these issues, the ironing systems introduced recently include an ironing board allowing an iron to be placed thereon, a support body arranged to support the ironing board, and movement wheels arranged to move the support body, and further include a connector arranged to rotatably connect the ironing board to the support body.

Due to the connector, legs for supporting the ironing board may be omitted from the ironing system. Accordingly, a user does not need to directly support the load of the ironing board during installation or storage of the ironing board.

The ironing board may be disposed on a front surface of the support body such that a longitudinal direction of the ironing board corresponds to a height direction of the support body.

In addition, the ironing board may be rotatable around the connector.

The connector may rotate upward with respect to the support body such that the ironing board may be disposed above the support body.

In addition, the operation of storing the ironing board may be performed by carrying out the above-described process in reverse order.

As such, the user only needs to provide a force for rotating the ironing board or the connector, and thus convenience may be ensured.

However, for the ironing system described above, during rotation of the ironing board from the front surface of the support body, the support body is likely to topple to one side.

In addition, the support body is formed to have a cross-sectional area smaller than an area of the ironing board. Moreover, the ironing board is formed such that a length thereof is much greater than a width thereof. Accordingly, when the user presses either one of both ends of the ironing board while the ironing board is seated on the support body, the entire ironing system may topple over.

In particular, since the ironing board is fixed only to the connector and does not have any separate support leg to support the ironing board, a load applied to one side of the ironing board imposes a strong rotational moment on the support body in proportion to the length of the ironing board. Accordingly, the ironing system has a fundamental structural limitation in that it cannot prevent toppling.

Furthermore, since the connector supports the load of the ironing board while the ironing board is rotated and moved, the ironing board may shake during ironing.

In addition, since a load is concentrated on the connector, the connector may be easily damaged.

In addition, since the movement wheels are fixed in one direction, the degree of freedom is still limited in moving the ironing system.

Further, when a load is applied to the ironing board, the installation position of the ironing system may be arbitrarily changed by the movement wheels, causing a potential safety accident.

Moreover, the ironing system causes inconvenience by requiring the user to lower their body height, such as by bending the waist, when rotating the ironing board.

In the conventional ironing system, the operation part and the indicator are provided on the support body. Accordingly, when the support body is coupled to a central portion of the ironing board, this arrangement may cause inconvenience for a user in operating the operation part and the display.

### [Disclosure]

### [Technical Problem]

An object of the present disclosure is to provide an ironing system having a rotatable ironing board.

Another object of the present disclosure is to provide an ironing system in which an operation part is provided on the ironing board.

Another object of the present disclosure is to provide an ironing system in which an indicator is provided on the ironing board.

Another object of the present disclosure is to provide an ironing system in which a height of the ironing board is adjustable.

Another object of the present disclosure is to provide an ironing system in which power is cut off according to an inclination of the ironing board.

Another object of the present disclosure is to provide an ironing system in which power is cut off according to an inclination of an iron.

### [Technical Solution]

In one aspect of the present disclosure, provided herein is an ironing system having a structure in which an operation part and an indicator are provided on a rotatable ironing board.

The ironing system may include an ironing board having a pressing surface provided to press clothing, a support body having an upper end joined to a rear surface of the ironing board to support the ironing board, a base arranged at a lower end of the support body and seated on a ground surface, a water supplier seated on the base to store water, a steam generator arranged on the base to receive water from the water supplier to generate steam, the steam generator being spaced apart from the water supplier, and an iron connected to the steam generator to receive steam from the steam generator, discharge the steam, and press the clothing. The ironing board may be joined to the support body so as to be rotated vertically and horizontally, and the ironing board may include an operation part provided on a top surface of the ironing board to receive an instruction from a user.

In the ironing system, the operation part may be a touch panel.

In the ironing system, the ironing board may include an indicator arranged spaced apart from the operation part and configured to indicate an operation status.

The ironing system may further include a lifting support arranged at the lower end of the support body to support a weight of the support body, and a lifting driver coupled to a rear surface of the lifting support and seated on the base to vary a height of the support body, wherein the operation part may be configured to receive an instruction relted to operating the lifting driver to vary the height of the support body.

In the ironing system, the ironing board may include a connector arranged on the rear surface of the ironing board and coupled to an upper end of the support body, wherein the support body may include a connector accommodation groove provided at the upper end of the support body to accommodate the connector, wherein the connector may include a connection body having one end rotatably supported by opposite side surfaces of the connector accommodation groove, a connection shaft having a lower end coupled to an outer circumferential surface of the connection body to move integrally with the connection body, an ironing board rotary part arranged at an upper end of the connection shaft and coupled to the ironing board to rotate about the connection shaft as a rotation axis, and a rotation driver configured to provide driving power to rotate the connection body and the ironing board rotary part. The operation part may be configured to receive an instruction related to operating the rotation driver to rotate the ironing board.

In the ironing system, the rotation driver may include a body driver arranged to provide driving power to rotate the connection body, and a shaft driver arranged to provide driving power to rotate the ironing board rotary part.

The ironing system may further include a sensor provided inside the ironing board to sense rotation of the connection body and the connection shaft to measure a position of the ironing board. Power may be supplied to or cut off from the steam generator according to the position of the ironing board sensed by the sensor.

In the ironing system, the sensor may be arranged inclined with respect to the ironing board.

The ironing system may further include an elastic member provided inside the ironing board so as to contact the sensor to fix a position of the sensor.

In the ironing system, the elastic member may be configured to deform when the ironing board rotates and to be restored to fix the sensor when the ironing board stops.

In the ironing system, the iron may include an iron body defining an exterior of the iron, and an iron operation part provided on an outer circumferential surface of the iron body to receive an instruction from the user.

In the ironing system, the iron may include an iron sensor configured to sense an inclination of the iron body. Power may be supplied to or cut off from the iron according to the inclination sensed by the iron sensor
The ironing system may further include a steamer connected to the steam generator to receive steam from the steam generator and discharge the steam toward the clothing, and a housing provided on one surface of the support body and having an accommodating space to accommodate the iron and the steamer.

In the ironing system, the connector accommodation groove may be disposed at a central portion of the upper end of the support body, wherein the connection shaft may have one end coupled to a center of the connection body and an opposite end coupled to a center of the ironing board.

In another aspect of the present disclosure, provided herein is an ironing system having a controller configured to execute an operation instruction according to the position of an ironing board.

The ironing system may include an ironing board having a pressing surface provided to press clothing, a support body having an upper end joined to a rear surface of the ironing board to support the ironing board, a base arranged at a lower end of the support body and seated on a ground surface, a water supplier seated on the base to store water, a steam generator arranged on the base to receive water from the water supplier to generate steam, the steam generator being spaced apart from the water supplier, and an iron connected to the steam generator to receive steam from the steam generator, discharge the steam, and press the clothing. The ironing board may include an ironing board sensor joined to the support body so as to be rotated vertically and horizontally and configured to sense a position of the ironing board, and a controller configured to execute an instruction according to a signal received from the ironing board sensor.

In one embodiment of the present disclosure, the controller of the iron system may supply power to or cut off power from the steam generator according to the position of the ironing board sensed by the ironing board sensor.

In one embodiment of the present disclosure, the ironing board of the iron system may include an indicator spaced apart from the pressing surface and configured to indicate an operating status.

In one embodiment of the present disclosure, the controller of the iron system may supply power to or cut off power from the indicator according to the position of the ironing board sensed by the ironing board sensor.

In one embodiment of the present disclosure, the indicator of the iron system may be a touch panel.

In one embodiment of the present disclosure, the iron system may include an operation part spaced apart from the indicator and configured to receive an instruction from a user.

In one embodiment of the present disclosure, the controller of the iron system may control the indicator to output an image in a forward direction or a reverse direction according to an instruction input through the operation part.

In one embodiment of the present disclosure, the indicator of the iron system may output a screen in a horizontal mode or vertical mode according to the position of the ironing board sensed by the ironing board sensor.

In one embodiment of the present disclosure, the iron system may further include a steamer connected to the steam generator to receive steam from the steam generator and discharge the steam toward the clothing.

In one embodiment of the present disclosure, when an instruction to select the iron is input through the operation part, the indicator of the iron system may display an operation status of the iron or display a notification prompting rotation of the ironing board according to the position of the ironing board sensed by the ironing board sensor.

In one embodiment of the present disclosure, when an instruction to select the steamer is input through the operation part, the indicator of the iron system may display an operation status of the steamer or display a notification prompting rotation of the ironing board according to the position of the ironing board sensed by the ironing board sensor.

In one embodiment of the present disclosure, the iron system may further include a lifting driver arranged on the base to vary a height of the support body.

In one embodiment of the present disclosure, the operation part of the iron system may be configured to receive an instruction related to operating the lifting driver to vary the height of the ironing board, and the indicator may display the height of the ironing board when the instruction to vary the height of the ironing board is input.

In one embodiment of the present disclosure, when a termination instruction is input through the operation part with the height of the ironing board adjusted, and then a start instruction is input, the lifting driver may initialize the height of the ironing board.

In one embodiment of the present disclosure, the indicator of the iron system may display a notification indicating initialization of the height of the ironing board.

In one embodiment of the present disclosure, the iron of the iron system may include an iron sensor configured to sense an inclination of the iron.

In one embodiment of the present disclosure, the controller of the iron system may supply power to or cut off power from the iron according to the inclination sensed by the iron sensor.

In one embodiment of the present disclosure, the controller of the iron system may supply power to or cut off power from the steam generator according to the inclination sensed by the iron sensor.

In one embodiment of the present disclosure, when the inclination of the iron is vertical for a predetermined period of time, power supplied to the iron may be cut off, and the indicator may display a notification indicating that the power supplied to the iron has been cut off.

In one embodiment of the present disclosure, the iron sensor may sense movement of the iron. When the iron sensor senses that the iron has stopped, the indicator may display a notification indicating that power supplied to the iron will be cut off when the iron remains in a stopped state for a predetermined period of time. When the iron sensor senses that the iron has remained stopped for the predetermined period of time, the controller may cut off power supplied to the iron. When the iron sensor senses movement of the iron, the controller may maintain the power supplied to the iron.

### [Advantageous Effects]

The present disclosure may provide an ironing system having a rotatable ironing board.

The present disclosure may provide an ironing system in which an operation part is provided on the ironing board.

The present disclosure may provide an ironing system in which an indicator is provided on the ironing board.

The present disclosure may provide an ironing system in which a height of the ironing board is adjustable.

The present disclosure may provide an ironing system in which power is cut off according to an inclination of the ironing board.

The present disclosure may provide an ironing system in which power is cut off according to an inclination of an iron.

### [Description of Drawings]

FIG. 1 illustrates an exterior appearance of an ironing system.
FIG. 2 illustrates movement of a support body that supports an ironing board.
FIG. 3 illustrates a housing that accommodates an iron and a steamer.
FIG. 4 illustrates an interior of a support body according to one embodiment of the present disclosure.
FIG. 5 illustrates a height adjuster according to one embodiment of the present disclosure.
FIG. 6 illustrates movement or fixation of the ironing system.
FIG. 7 illustrates a process in which the ironing board rotates.
FIG. 8 illustrates a connector connecting the ironing board and the support body in the ironing system according to the present disclosure.
FIG. 9 illustrates a sensor according to the present disclosure.
FIG. 10 illustrates an operation part and an indicator provided on the ironing board.
FIG. 11 illustrates an iron of the ironing system according to the present disclosure.
FIG. 12 illustrates screens displayed on the indicator upon automatic shutdown of the ironing system according to the present disclosure.
FIG. 13 illustrates states of the indicator and the steam generator according to a position of the ironing board of the ironing system according to the present disclosure.
FIG. 14 illustrates screens displayed when an iron or a steamer of the ironing system according to the present disclosure is used.
FIG. 15 illustrates screens displayed on the indicator during booting of the ironing system according to the present disclosure.
FIG. 16 illustrates screens of a settings list of the ironing system according to the present disclosure.
FIG. 17 illustrates screens displayed on the indicator during adjustment of the height of the ironing board of the ironing system according to the present disclosure.
FIG. 18 illustrates screens displayed on the indicator during fixation of a movement portion of the ironing board of the ironing system according to the present disclosure.
FIG. 19 illustrates a screen displayed on the indicator during cleaning of a steam generator of the ironing system according to the present disclosure.
FIG. 20 illustrates screens displayed on the indicator during Wi-Fi connection of the ironing system according to the present disclosure.
FIG. 21 illustrates a screen displayed on the indicator during a process from a notification of initialization of the ironing board to course selection in the ironing system according to the present disclosure.
FIG. 22 illustrates screens displayed on the indicator during a process from course selection to course execution in the ironing system according to the present disclosure.
FIG. 23 illustrates screens displayed on the indicator during a process from course execution to course completion in the ironing system according to the present disclosure.

### [Best Mode]

Hereinafter, embodiments disclosed herein will be described in detail with reference to the accompanying drawings. In the present disclosure, the same or similar reference numerals are assigned to the same or similar elements in different embodiments, and redundant descriptions thereof will be omitted. As used herein, the singular forms include plural forms unless the context clearly indicates otherwise. In addition, in describing the embodiments disclosed herein, when it is determined that the detailed description of the related known technology may obscure the gist of the embodiments, the detailed description thereof will be omitted. In addition, it should be noted that the accompanying drawings are merely intended to provide a further understanding of the embodiments disclosed in the present disclosure and are not to be construed as limiting the technical ideas disclosed herein.

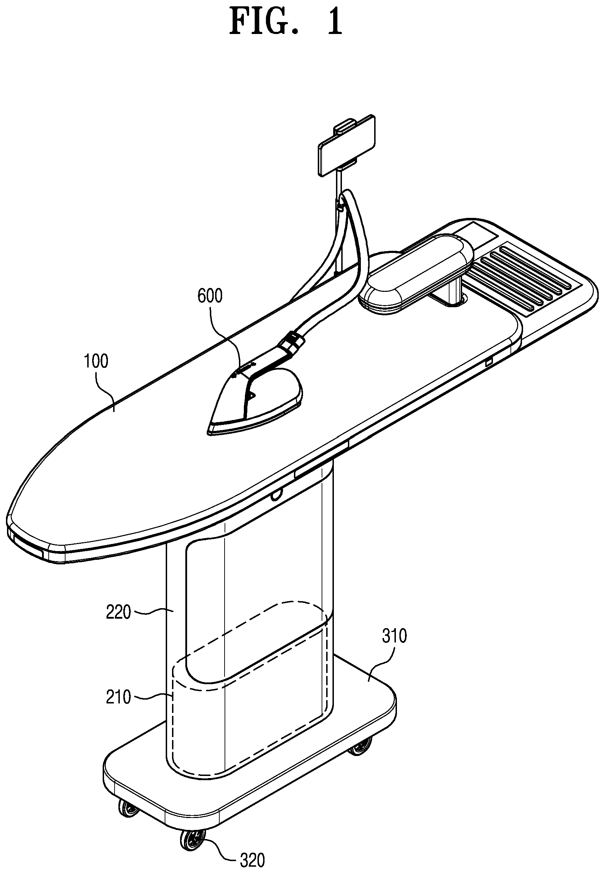

FIG. 1 illustrates an ironing system according to one embodiment of the present disclosure.

The ironing system of the present disclosure may include an ironing board 100 having a pressing surface provided to place clothing or an iron or press clothing, a support body 200 coupled to the ironing board 100 to support the ironing board 100, and a base 300 arranged at a lower end of the support body 200 to seat the support body 200 on the ground.

The ironing board 100 may be formed in a plate shape. The ironing board 100 may have a length greater than a width. The ironing board 100 may include a straight portion extending on both sides in a front-back direction, and an inclined portion extending from an end of the straight portion forward such that a width thereof gradually decreases.

The straight portion may form both side surfaces of the ironing board 100 with respect to a longitudinal direction of the ironing board 100, and the inclined portion may form one end or a front with respect to the longitudinal direction of the ironing board 100. A user may fit a portion of clothing onto the board through the inclined portion to perform ironing on a specific area of the clothing.

In addition, a sleeve board insertion groove into which a sleeve board may be inserted and installed may be provided on one side of the pressing surface of the ironing board 100.

The support body 200 may have a height greater than a thickness or a width thereof. Accordingly, the ironing board 100 may be set or installed at the height of the waist of an adult or a higher position. Accordingly, with the ironing system, the user may perform ironing in a standing posture or without excessively bending an upper body.

In addition, the support body 200 may be configured to have an adjustable height. The method of adjusting the height will be described later.

The support body 200 may include a first support body 210 fixed to the base 300, and a second support body 220 coupled to the first support body so as to be movable along the first support body, the ironing board 100 being provided at an upper end of the second support body.

In addition, the second support body 220 may include a connector accommodation groove to accommodate a connector, which will be described later, and to provide a space allowing the connector to rotate therein.

The connector accommodation groove may be provided at the upper end of the second support body 220 to provide a space in which the connector rotates, thereby preventing interference between the ironing board and the second support body.

The base 300 may include a seating portion 310 provided at a lower end of the first support body 210 to support the first support body, and a movement part 320 protruding downward from a lower portion of the seating portion toward the ground, seated on the ground, and configured to allow the base to be move.

The base 300 may extend from the lower end of the support body 200. Alternatively, the base 300 may be joined to a lower portion of the support body 200.

The base 300 may be configured to support at least a portion of the weight of the support body 200. The base 300 may be formed of a reinforced plastic material or an elastic material. Accordingly, not only the weight of the support body 200 but also an external force that may be applied to the pressing surface of the ironing board 100 may be stably supported.

The base 300 may have an area corresponding to the cross-sectional area of the lower end of the support body 200. Accordingly, even when the base 300 is provided, the base 300 may not protrude from the support body 200. Thereby, aesthetics may be maximized.

In addition, as illustrated in the figure, the base 300 may have an area larger than the cross-sectional area of the lower end of the support body 200 and may extend along the ground at the lower end of the support body 200. Accordingly, the base 300 may prevent the support body 200 from tipping over or overturning.

Since the base 300 should stably ground the support body 200 on the ground, the base 300 may be formed of a material having greater friction than that of the support body 200. However, when the base 300 causes large friction, it may be difficult to move the ironing system.

The seating portion 310 may have an area larger than that of the support body 200. This is intended to stably support the support body and the ironing board 100 and to prevent the ironing system of the present disclosure from tipping over.

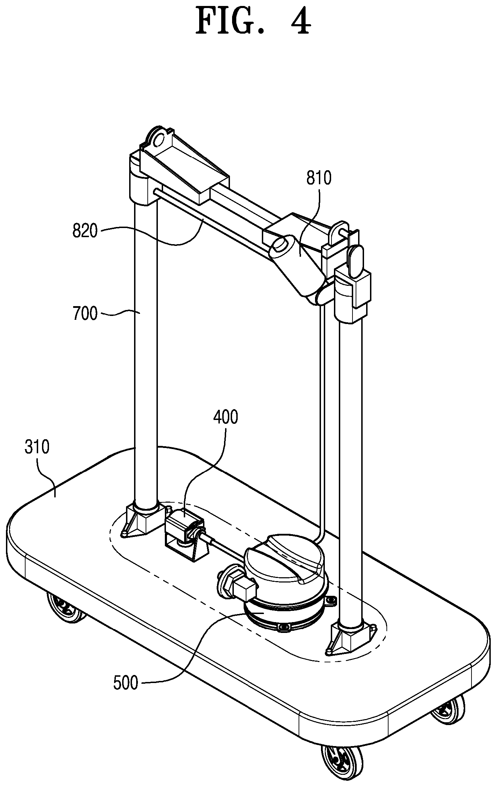

In addition, the seating portion 310 may include an accommodation space in which a water supplier 400 configured to store water and a steam generator 500 (see FIG. 4), which is spaced apart from the water supplier and generates steam with water supplied from the water supplier, are seated. Accordingly, the seating portion 310 may have a large area as long as it does not hinder movement.

In addition, the movement part 320 generally has wheels, but may have any means capable of moving the base 300.

Further, the ironing system may include an iron 600 connected to the steam generator 500 (see FIG. 4) to receive steam from the steam generator to discharge steam and press clothing.

The iron 600 may press clothing seated on the pressing surface and discharge steam supplied from the steam generator 500 (see FIG. 4) to remove wrinkles from the clothing.

In addition, the iron 600 may include a heater therein to directly heat the steam or to heat a surface that comes into contact with the clothing.

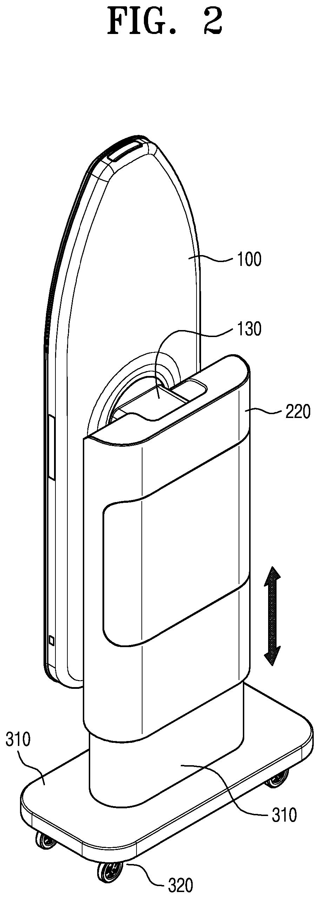

FIG. 2 illustrates adjustment of the height of the ironing system according to the present disclosure.

The ironing board 100 may be joined to the second support body 220 by a connector 130 so as to rotate upward and downward.

Accordingly, after ironing is completed, the ironing board 100 may be rotated to a stored position so as to be perpendicular to the ground, thereby reducing the space occupied by the ironing board. That is, the stored position may refer to the arrangement of the ironing board 100 parallel to a height direction of the support body 200.

In an in-use position, the ironing board 100 may be rotated so as to be positioned parallel to the ground in order to allow clothing to be seated on the ironing board 100. That is, the in-use position may refer to the arrangement of the ironing board positioned perpendicular to the support body.

In addition, the first support body 210 may be fixed to the seating portion 310, and the second support body 220 may be arranged to move upward and downward along the first support body. Accordingly, the ironing board 100 joined to the second support body by the connector 130 may be moved upward and downward together with the first support body, such that the height of the ironing board may be adjusted according to user convenience. A mechanism by which the second support body is moved upward and downward will be described later.

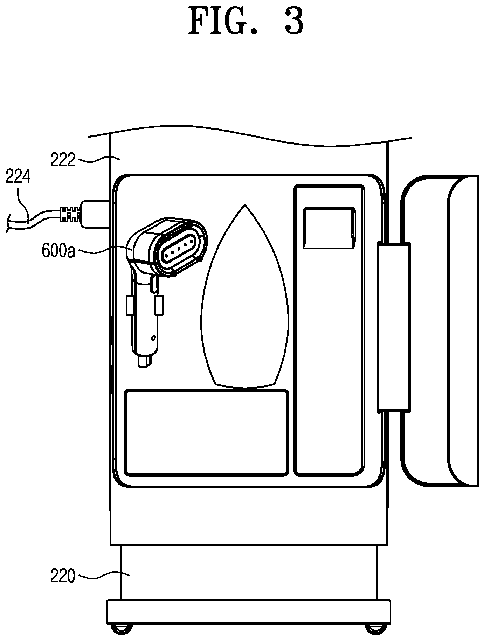

FIG. 3 illustrates a housing that accommodates the iron and the steamer configured to discharge steam supplied from the steam generator.

The steam generator 500 of the ironing system according to the present disclosure may supply steam to the iron 600 or the steamer 600a. Accordingly, the user may selectively use the iron or the steamer according to convenience.

A housing 222 capable of accommodating the iron 600 or the steamer may be provided on a front surface or a rear surface of the second support body 220.

A mounting portion may be provided inside the housing 222 to mount the iron 600 or the steamer thereon.

In addition, one side of the housing 222 may be provided with a steam line connector for supplying steam to the iron 600 or the steamer, and a power line connector 224 for supplying power to the heater provided in the iron 600 or the steamer.

The support body 200 may include a power supply connected to the iron to supply power, and a steam generator 500 configured to supply steam to the iron 600 or the steamer.

The power supply and the steam generator 500 may be installed inside the support body 200.

The support body 200 may be provided with the power line connector 224 communicating with the power supply, and the steam line connector communicating with the steam generator. The power line connector 224 and the steam line connector may be integrally provided as one unit, or may be provided on opposite side surfaces of the support body 200 to avoid interference with the ironing board 100.

In addition, the steam line connector and the power line connector 224 may be provided in the form of corrugated tubes so as to be adjustable in length, and may be detachably connected to the iron or the steamer.

FIG. 4 illustrates the base 300 with the support body 200 removed.

A central portion of the base 300 may include a seating portion 310 that accommodates the steam generator 500, the water supplier 400, and a height adjuster 700 to be described later, and the first support body 210 (see FIG. 3) may be arranged on the outer side of the base to surround the steam generator, the water supplier, and the height adjuster.

The water supplier 400 and the steam generator 500 may be arranged on the seating portion 310 so as to be spaced apart from each other and may be connected by a tube such that water stored in the water supplier is supplied to the steam generator.

In addition, the height adjuster 700 coupled to the second support body 220 may also be arranged on the seating portion 310. The second support body may have a cross-sectional area larger than that of the first support body 210 so as to accommodate the first support body.

The height adjuster 700 may include a first height adjustment body 710 and a second height adjustment body 720.

A lower end of the first height adjustment body 710 may be fixed to the seating portion 310, and the second height adjustment body 720 may be accommodated inside the first height adjustment body. That is, the diameter of the first height adjustment body may be greater than the diameter of the second height adjustment body. The first height adjustment body may be formed as a hollow rod having an internal hollow portion, and the second height adjustment body may be formed in a shape corresponding thereto.

When the second height adjustment body 720 is positioned maximally inserted into the first height adjustment body 710, the second height adjustment body may protrude beyond an upper end of the first height adjustment body, and the second support body 220 may be coupled to the protruding portion so as to move integrally with the second height adjustment body.

When the second height adjustment body moves upward and downward along the first height adjustment body 710, the second support body may also move upward and downward, and the ironing board 100 coupled to the second support body may also move upward and downward.

The second height adjustment body 720 may be provided with a lifting driver 810 configured to provide driving power to move the second height adjustment body upward and downward. The lifting driver may be in the form of a worm gear, but is not limited thereto, and any means capable of converting rotational motion into linear motion may be used. In addition, as long as the first height adjustment body is fixed and the second height adjustment body is movable upward and downward, the lifting driver may be provided in the form of a piston and a cylinder.

In addition, the height adjuster 700 may include multiple height adjusters. By providing multiple height adjusters, the support body 200 may be stably supported.

When the height adjuster 700 includes multiple height adjusters, a power transmitter 820 may be provided to transmit power provided by the lifting driver 810 to each of the height adjusters. As the power transmitter is provided, the multiple height adjusters may be adjusted to the same height, thereby preventing the ironing board from tilting to one side.

While FIG. 4 illustrates that each of opposite side surfaces of the seating portion 310 is provided with one height adjuster 700 and that the second height adjustment body is provided with the lifting driver 810, a single height adjuster or three or more height adjusters may be provided, and the base 300 may be provided with the lifting driver.

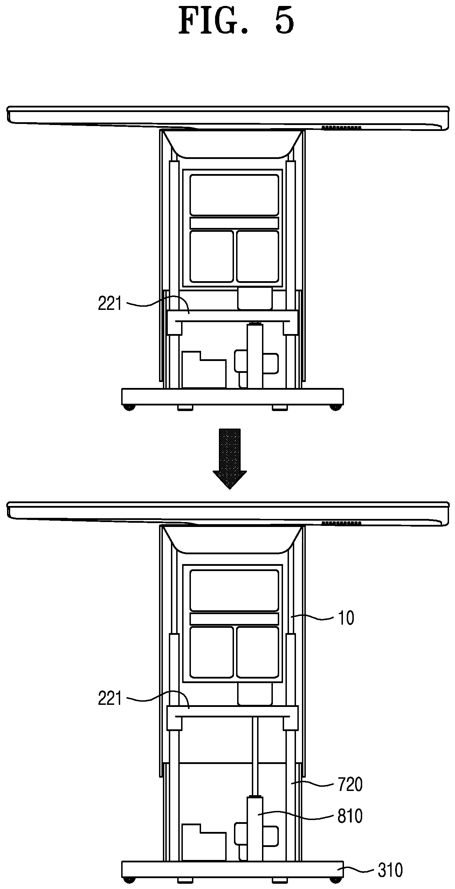

FIG. 5 illustrates that a lifting driver of the ironing system according to the present disclosure includes a piston and a cylinder.

The support body may include a lifting support 230 arranged at a lower end of the support body to support a weight of the support body, and a lifting driver 810 coupled to a rear surface of the lifting support and seated on the seating portion 310, the lifting driver being configured to vary a height of the support body.

The lifting support 230 may be provided in the form of a plate so as to support a load applied to the second support body or the second height adjustment body.

The lifting driver 810 may be provided as an electric cylinder including a cylinder and a piston.

A lower end of the piston, which is arranged to reciprocate inside the electric cylinder, may be inserted into the cylinder to perform a reciprocating motion inside the cylinder, and an upper end of the piston may be coupled to the lifting support 230 to perform the reciprocating motion outside the cylinder.

Accordingly, as the piston reciprocates, the lifting support 230 supporting the second height adjuster 720 or the second support body 220 may move upward and downward, thereby adjusting the height of the ironing board 100.

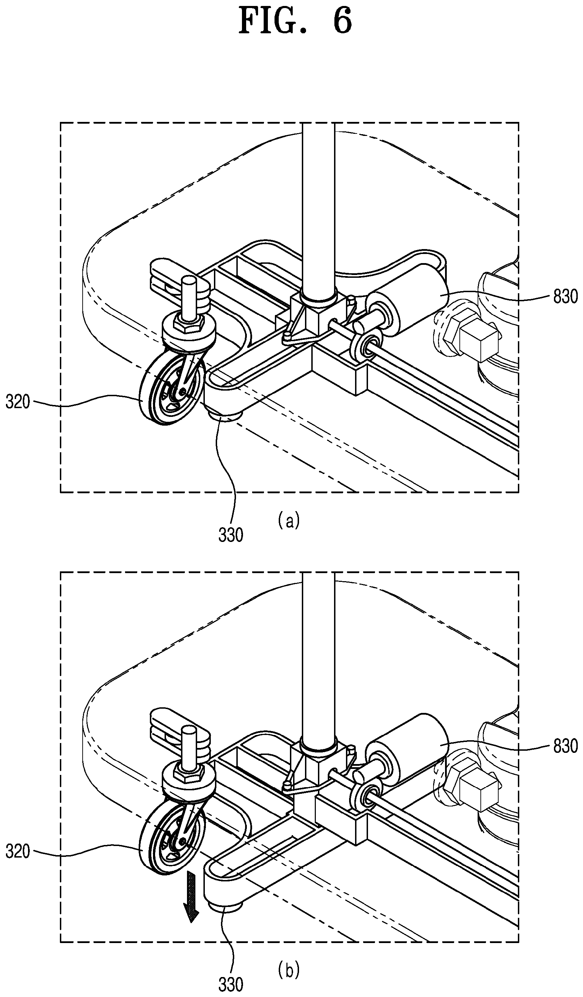

FIG. 6 illustrates a movement part that enables the ironing system according to the present disclosure to move.

The movement part 320 may protrude downward from the seating portion 310 to contact the ground and to support the weight of the ironing system according to the present disclosure. In addition, the movement part 320 may be arranged to move the ironing system.

Since the ironing system is subjected to an external force during use thereof, it may be moved by the movement part 320, which may compromise user safety. Therefore, while being used, the ironing system needs to be fixed so as not to be moved by the movement part. Accordingly, the ironing system according to the present disclosure may include a fixing part 330 extendable downward from a lower portion of the base.

The fixing part 330 may be extended downward from the base 300 to a length greater than or equal to that of the movement part 320, and friction may be generated as the fixing part 330 contacts the ground, thereby preventing the movement part from moving the ironing system by. Therefore, a portion of the fixing part that contacts the ground may be formed of a material having a high coefficient of friction.

The fixing part 330 may be inserted into the base 300 when the ironing system is to be moved, and may protrude toward the ground to fix the ironing system when the ironing system is to be used.

A fixing driver 830 configured to provide power to extend or retract the fixing part 330 may be provided. The fixing driver may be provided in the form of a worm gear, but is not limited thereto. Any component capable of moving the fixing part upward and downward may be used. The fixing driver may be arranged on the support body 200 or the ironing board 100, and may be driven or stopped by an operation part configured to receive an instruction from a user.

While FIG. 6 illustrates that the fixing part 330 includes fixing parts as many as the movement parts 320, and the fixing parts are arranged adjacent to and spaced apart from the movement parts, the present disclosure is not limited thereto. The fixing parts may be provided at any position as long as they are capable of fixing the ironing system. However, arranging the fixing parts as close to the movement parts as possible and as many as the movement parts may be more efficient in fixing the ironing system.

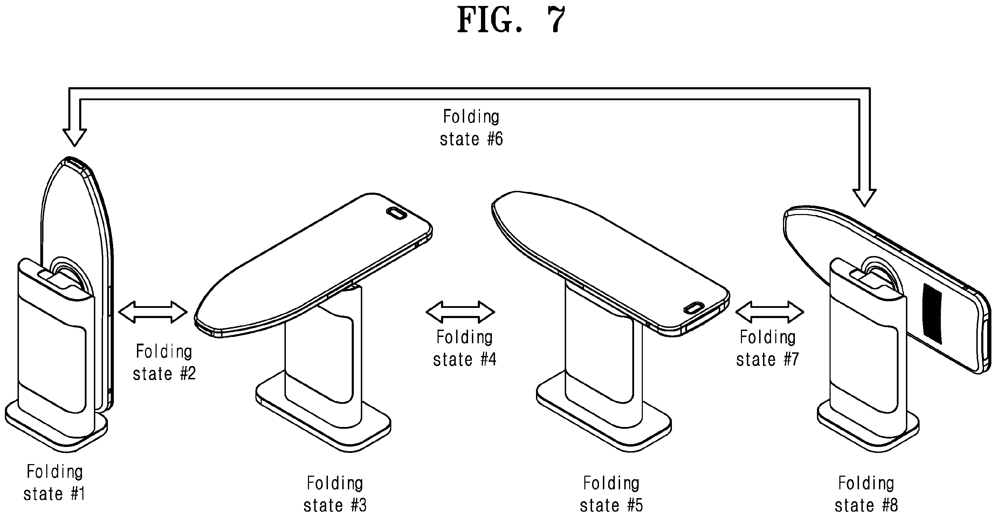

FIG. 7 illustrates changes in position of the ironing board according to rotation.

The ironing board 100 and the support body 200 may be arranged such that the ironing board is rotatable by the connector 130 provided on the ironing board. That is, the connector may be rotatably coupled to the support body to rotate the ironing board.

In order to minimize space occupied in the stored position, the ironing board 100 may be rotated to be arranged parallel to the support body 200. That is, in the stored position, the front end of the ironing board may be oriented upward and the rear end thereof may be oriented downward.

The front end of the ironing board 100 in the stored position may be moved downward such that the ironing board is arranged parallel to the ground. In other words, the ironing board baby rotated such that the front end and the rear end of the ironing board are positioned at the same height. In this case, the ironing board may be supported in a width direction of the ironing board by the upper end of the support body 200, thereby withstanding an external force applied thereto during use of the iron 600.

In addition, the ironing board 100 may be rotatable in a left-right direction. Accordingly, the support body 200 may support the ironing board 100 along a longitudinal direction. When the ironing board is rotated such that the support body supports the ironing board along the longitudinal direction, a rotational moment caused by an external force applied by a user during use of the iron 600 may be reduced compared to a case where the ironing board is positioned to be supported in the width direction, thereby preventing the ironing system from tipping over and allowing more stable use.

When the steamer is used, clothes do not need to be pressed, and thus the ironing board 100 may be rotated such that the top surface thereof faces the user, thereby enhancing user convenience. Accordingly, a holder on which clothes may be hung may be provided on a side surface of the ironing board.

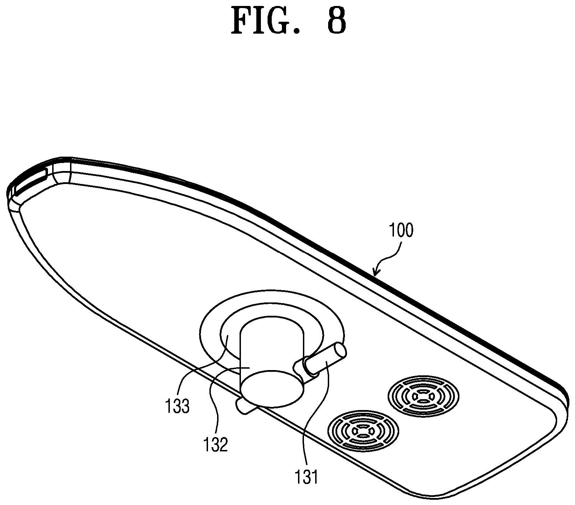

FIG. 8 illustrates a connector provided on a rear surface of the ironing board.

The connector 130 may be provided on the rear surface of the ironing board 100 to connect the ironing board to the second support body 220.

The connector 130 may include a connection body 131 rotatably coupled to and supported on both side surfaces of the connector accommodation groove 240 so as to be parallel to a width direction of the second support body 220, a connection shaft 132 having a lower end coupled to the connection body so as to rotate integrally with the connection body when the connection body rotates, and an ironing board rotary part 134 arranged at an upper end of the connection shaft and coupled to the rear surface of the ironing board to rotate about the connection shaft as a rotation axis.

In addition, the connector accommodation groove may be positioned at a center of the upper end of the second support body. One end of the connection shaft may be coupled to the center of the connection body while the opposite end thereof may be coupled to the center of the ironing board. Accordingly, generation of a rotational moment applied to the ironing system due to an external force may be reduced, thereby preventing the ironing system from tipping over.

The connection body 131 may be formed in the shape of a rod supported on the upper end of the second support body 220 in a width direction so as to roll, and the connection shaft 132 may be coupled to an outer circumferential surface of the connection body so as to be rotatable upward and downward by rolling of the connection body.

In addition, the ironing board rotary part 134 may rotate upward and downward together with the connection shaft, and the connection shaft is coupled to the rear surface of the ironing board 100. Accordingly, the ironing board may also rotate about the connection shaft.

In addition, the connection body may be coupled by a hinge to the connector accommodation groove 240 provided in the second support body.

That is, the connection body 131 may function as a rotation axis that allows the ironing board 100 to rotate upward and downward, and the connection shaft 132 may function as a rotation axis about which the ironing board may rotate horizontally.

The connector 130 may include a rotation driver 134 configured to provide power for rotating the ironing board 100.

The rotation driver 134 may include a body driver 134a arranged to provide driving power such that the connection body 131 rolls to cause the connection shaft 132 to rotate upward and downward, and a shaft driver 134b arranged to provide power such that the ironing board 100 rotates about the connection shaft 132 as a rotation axis.

The rotation driver 134 may be provided on the ironing board 100 and may be operated by the operation part 110 configured to receive an instruction from a user.

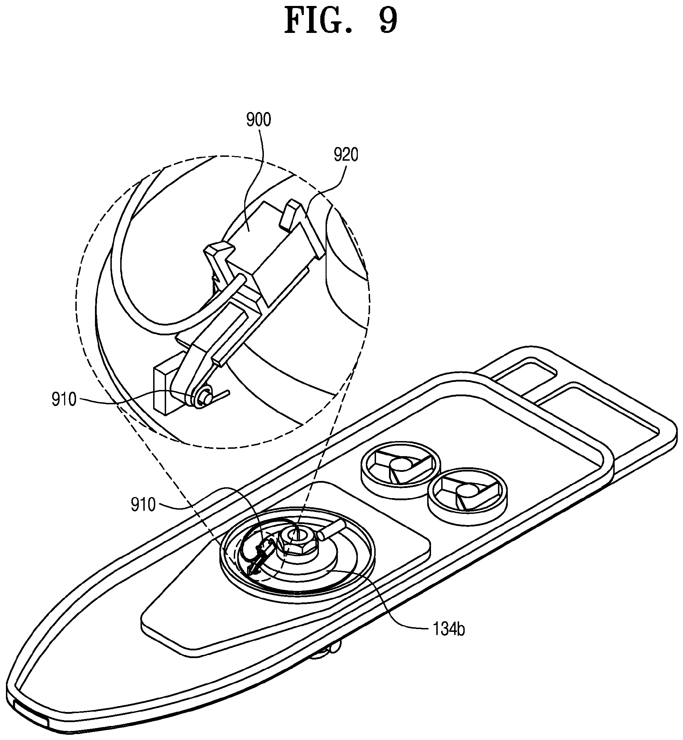

FIG. 9 illustrates an interior of the ironing board.

An ironing board sensor 900 configured to sense movement of the ironing board to measure a position of the ironing board may be provided inside the ironing board 100.

Specifically, the sensor 900 may sense rotation of the connection body 131 and the ironing board rotary part 133 to sense the position of the ironing board.

The ironing board sensor 900 may include a gyro sensor, and may be arranged to be inclined with respect to the ironing board in order to determine whether the ironing board 100 is in a vertical position or horizontal position with respect to the ground, and whether it has rotated in the horizontal position. That is, the gyro sensor may be arranged to be inclined to sense motions in various directions.

Accordingly, a sensor support 920 for supporting the ironing board sensor 900 may be arranged to be inclined with respect to the ironing board, and the ironing board sensor may be seated on the sensor support.

In addition, an elastic member 910 may be arranged to contact the ironing board sensor 900 in order to fix the position of the ironing board sensor when the ironing board 100 is not rotating.

That is, when the ironing board 100 rotates, the elastic member 910 may be moved by an external force. When the external force is removed, the elastic member may be restored to an original state to contact and support the ironing board sensor such that the position of the ironing board sensor is fixed.

In addition, a blowing fan for lowering a temperature of the iron 600 may be arranged inside the ironing board 100.

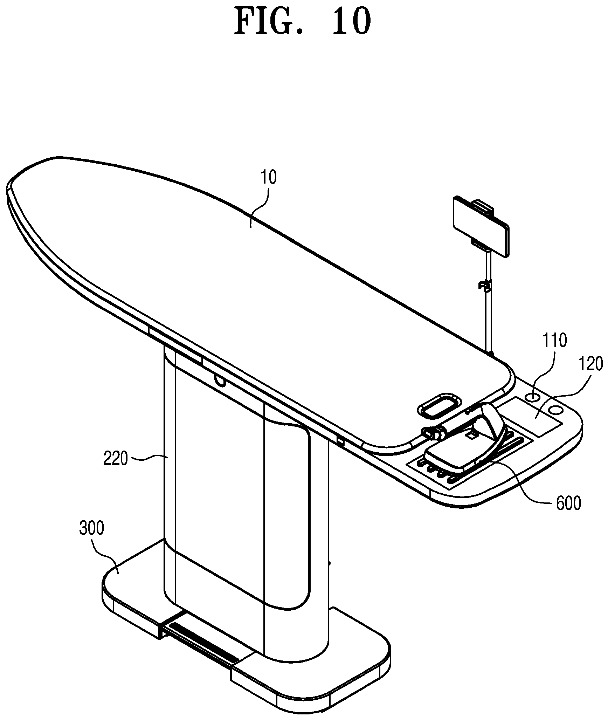

FIG. 10 illustrates an external appearance of the ironing system according to the present disclosure.

The ironing board 100 may be joined to the support body 200 by the connector 130 so as to be rotatable vertically and horizontally, and the ironing board may include an operation part 110 arranged on a top surface of the ironing board to receive an instruction from a user.

The operation part 110 may include a touch panel, and the operation part 110 and an indicator 120 configured to display the status of the ironing system and information about the ironing system may be integrally formed. However, the present disclosure is not limited thereto. The indicator may be provided separately from the operation part. Hereinafter, description will be made assuming that the operation part and the indicator are separately provided.

Since the support body 200 is joined to a central portion of the rear surface of the ironing board 100, the support body may be hidden by the ironing board during use of the ironing system according to the present disclosure.

Accordingly, when the operation part 110 is arranged on the support body 200, it may be inconvenient for a user to input an instruction through the operation part during use of the ironing system. Therefore, the operation part and the indicator of the ironing system according to the present disclosure may be provided on the top surface of the ironing board so as to move integrally with the ironing board.

That is, although the indicator 120 and the operation part 110 may be provided on the support body, providing the indicator and the operation part on the top surface of the ironing board 100 may enhance user convenience.

Specifically, the top surface of the ironing board 100 may include an iron seating portion on which the iron 600 may be seated, the iron seating portion being spaced apart from the pressing surface, the indicator 120 spaced apart from the iron seating portion, and the operation part 110 spaced apart from the indicator.

Since the display of the indicator 120 is adjacent to the iron seating portion and is thus likely to contact the iron 600. Accordingly, it may be formed of heat-resistant tempered glass.

The operation part 110 may receive an instruction for adjusting the height of the ironing board 100, an instruction for rotating the ironing board, and an instruction for drawing out the fixing part 330 to fix the movement part 320 is fixed.

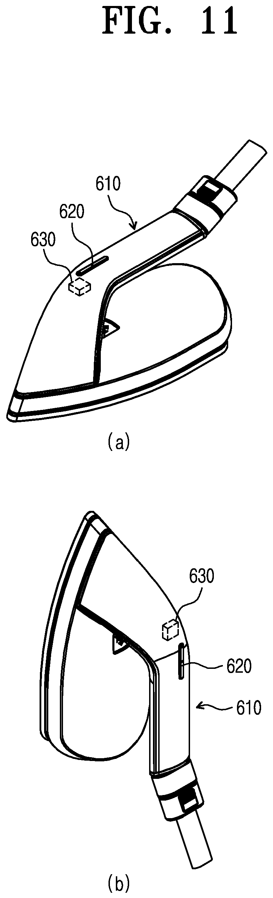

FIG. 11 illustrates an external appearance of an iron provided in the ironing system according to the present disclosure.

The iron 600 may include an iron body 610 defining an exterior of the iron, an iron operation part 620 provided on an outer circumferential surface of the iron body to receive an instruction from a user, and an iron sensor 630 configured to sense an inclination of the iron body. Power may be supplied to or cut off from the iron according to the inclination sensed by the iron sensor.

The iron body 610 may include a contact surface provided to press clothing seated on the pressing surface of the ironing board 100, and a handle provided to be gripped by a user.

The contact surface may be formed of a metal material so as not to be damaged even when a temperature thereof increases due to a heat generator provided inside the iron body 610. In addition, the contact surface may include a discharge part configured to discharge steam supplied from the steam generator.

The iron operation part 620 may receive instructions for adjusting a temperature of the iron and discharge of steam. That is, the iron operation part may control electric power supplied to the heat generator or adjust a valve configured to control discharge of steam supplied from the steam generator. The iron operation part 620 may be provided on the handle so as to be operable while the user grips the handle.

In addition, a heater configured to heat the steam may be arranged inside the iron body 610. This is intended to allow steam remaining inside the iron body to be heated and immediately discharged under control of the valve.

In addition, the iron sensor 630 may sense an inclination of the iron 600 with respect to a gravitational direction. The iron sensor may generally include a gyro sensor, but the present disclosure is not limited thereto.

Power supplied to the iron may be cut off according to the inclination of the iron sensed by the iron sensor 630.

Specifically, when the contact surface is inclined to contact the ironing board 100, the iron 600 may be determined to be in use, and power supplied to the iron may be maintained. That is, when the contact surface is inclined to be parallel to the ground, the iron may be determined to be in use, and power supply may be maintained without being cut off.

On the other hand, when the contact surface is sensed to be perpendicular to the ironing board 100, use of the iron may be determined to be stopped. When this state continues for a predetermined time, power supplied to the iron 600 may be cut off. Power supplied to the steam generator and the indicator may also be cut off.

When the power is cut off, operation of the heater is stopped such that the temperature of the contact surface gradually decreases, and the valve configured to control discharge of steam supplied to the iron may be closed to prevent steam from being discharged.

Accordingly, an increase in temperature of the iron or discharge of steam may be prevented when use of the iron is stopped. Thereby, user safety may be ensured.

In addition, the iron sensor 630 may include a sensor configured to sense movement of the iron 600.

When the iron sensor 630 senses that the iron 600 is moving, the iron may be determined to be in use and power may not be cut off. When the iron is sensed to be not moving, use of the iron may be determined to be stopped and power may be cut off after a predetermined time elapses. Power supplied to the steam generator and the indicator may also be cut off.

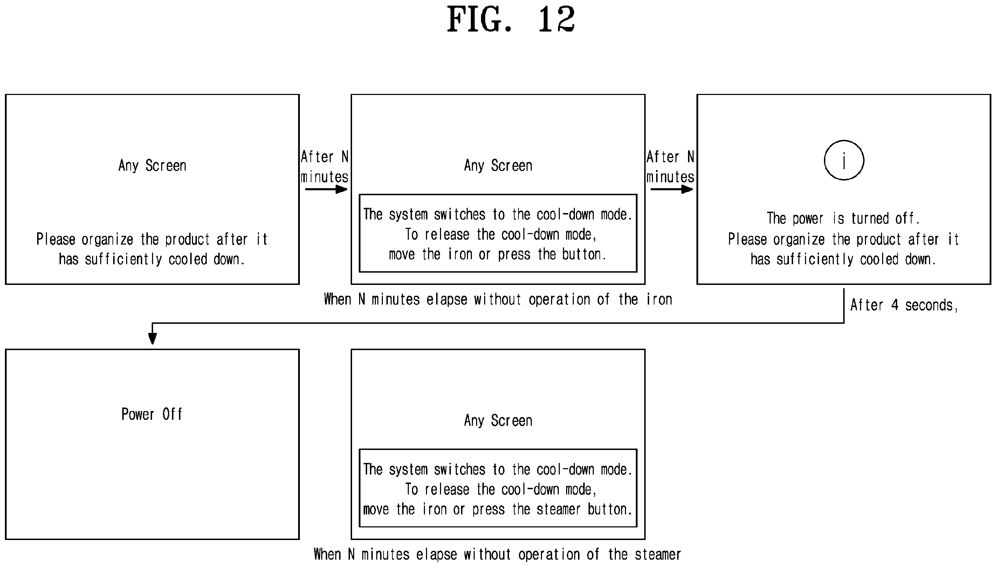

FIG. 12 illustrates screens displayed on the indicator upon automatic shutdown due to non-use of the iron.

As described above, when the iron sensor 630 determines that the iron 600 is not in use, the iron may be automatically turned off.

When the iron sensor 630 determines that the iron has not been in use for a predetermined time, the indicator 120 may display a notification indicating that the iron will be automatically turned off unless the iron 600 is moved or the iron operation part 620 is operated, and may display a notification indicating that a cool-down mode is activated to release residual heat remaining in the iron while the iron is switched to the cool-down mode.

When a predetermined time elapses after the notification indicating that the iron 600 will be automatically turned off is displayed, the indicator 120 may display a notification indicating that power will be cut off shortly and a notification instructing the user to sufficiently cool and organize the iron, and the iron may be automatically turned off after the predetermined time elapses.

The automatic shutdown of the iron 600 may mean that power to the steam generator 500 is cut off, power to the indicator 120 is cut off, and power to the iron 600 is cut off.

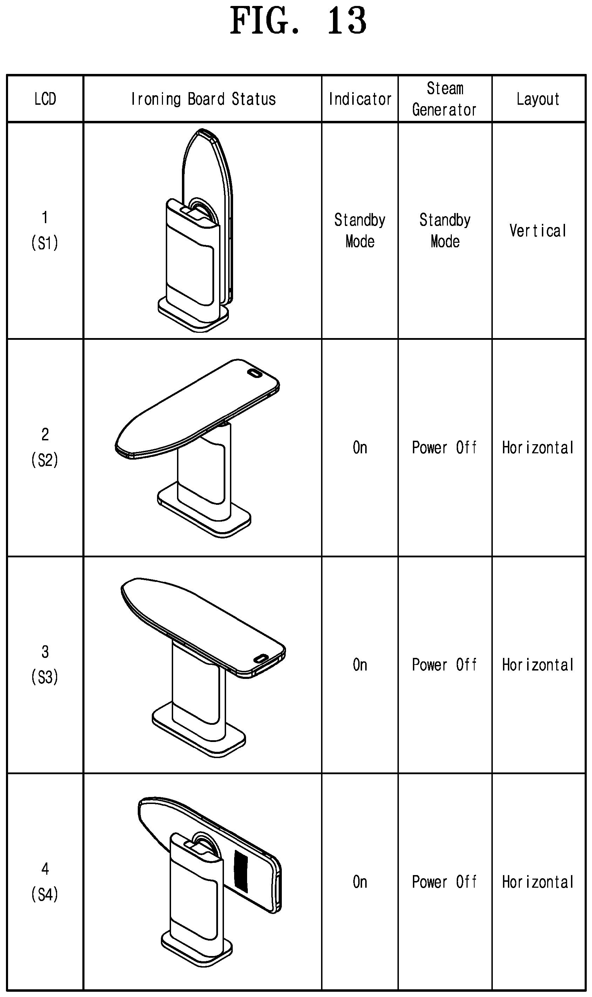

FIG. 13 illustrates states of the indicator and the steam generator according to a position change caused by rotation of the ironing board.

The ironing system of the present disclosure may further include a controller configured to execute an instruction according to a signal received from the ironing board sensor 900.

When the ironing board 100 is in a stored position S1, the ironing board may be arranged to be perpendicular to the ground. In this case, the indicator 120 may be in a standby mode such that power is supplied when an instruction is input through the operation part 110. When the instruction is input, the display may output a screen in a vertical mode. The vertical mode may mean that a vertical length of the output screen is longer.

In addition, the steam generator 500 may also be in a standby mode such that power is supplied thereto when an instruction is input through the operation part 110. When an instruction is input, power may be supplied to the steam generator. However, since the iron 600 may be unusable in the stored position S1, power may be supplied to the steam generator only when an instruction to use the steamer 600a is input.

Accordingly, when power of the ironing system of the present disclosure is turned on in the stored position S1 and the steamer 600a is selected, the indicator 120 may output a course selection screen for the steamer. When the iron 600 is selected, the indicator may display a notification indicating that the ironing board 100 should be rotated to the in-use position S3 because the iron is unusable in the stored position.

The in-use position may mean a position in which the ironing board is parallel to the ground and the support body is rotated to support the ironing board along the longitudinal direction.

In the course selection screen, courses may be classified according to materials of clothing, such as wool/silk, cotton/linen, and rayon. When the indicator and the operation part are integrally provided as a touch panel, selection may be performed through left-right swipe operations. When they are separately provided, the courses may be selected by inputting instructions through the operation part.

According to the selected course, temperature, fan speed, and the like may be set differently, and the indicator 120 may display the temperature, fan speed, and the like for each course, and may display text explaining characteristics of each course.

When the front end of the ironing board 100 in the stored position S1 rotates downward such that the ironing board becomes parallel to the ground and the support body 200 supports the ironing board along the width direction, thereby arranging the ironing board in a position S2, power may be supplied to the indicator 120 and a screen indicating booting may be displayed. At this time, the screen of the indicator may be output in a horizontal mode. The horizontal mode may mean that the horizontal length of the output screen is longer.

In the position S2, the steam generator 500 may be in a power-off state. When clothing is pressed using the iron in the position S2, a rotational moment may increase due to an external force, thereby increasing a risk that the ironing system of the present disclosure may tip over. Accordingly, user safety may not be ensured, and thus power to the steam generator may be cut off.

Therefore, when power of the ironing system of the present disclosure is turned on in the position S2 and the steamer 600a or the iron 600 is selected, the indicator 120 may display a notification indicating that the ironing board 100 should be rotated to the in-use position S3. The in-use position may mean a position in which the ironing board is parallel to the ground and the support body is rotated to support the ironing board along the longitudinal direction.

The ironing board 100 in the position S2 may rotate horizontally to be an in-use position S3 in which the support body supports the ironing board along the longitudinal direction. In this case, power may be supplied to the indicator 120 and a screen indicating booting may be displayed. The screen of the indicator may be output in a horizontal mode. The horizontal mode may mean that the horizontal length of the output screen is longer.

In addition, the steam generator 500 may be in a standby mode such that power is supplied when an instruction is input through the operation part 110. When the instruction is input, power may be supplied to the steam generator. In the in-use position S3, both the iron 600 and the steamer 600a are usable.

Accordingly, in the in-use position S3, when power of the ironing system of the present disclosure is turned on and the iron 600 or the steamer 600a is selected, the indicator 120 may output a course screen for the iron or the steamer. The in-use position may mean a position in which the ironing board is parallel to the ground and the support body is rotated to support the ironing board along the longitudinal direction.

When the ironing board 100 in the in-use position S3 rotates downward to one side to set in a position S4, power supplied to the indicator 120 may be maintained, but power supplied to the steam generator 500 may be cut off. This may be because, similar to the position S2, there is a risk that the ironing system of the present disclosure may tip over.

While FIG. 13 illustrates that the indicator 120, the steam generator 500, the iron 600, and the steamer 600a are controlled according to the position of the ironing board, the present disclosure is not limited thereto. The indicator, the steam generator, the iron, and the steamer may be operated by inputting any instructions according to user convenience.

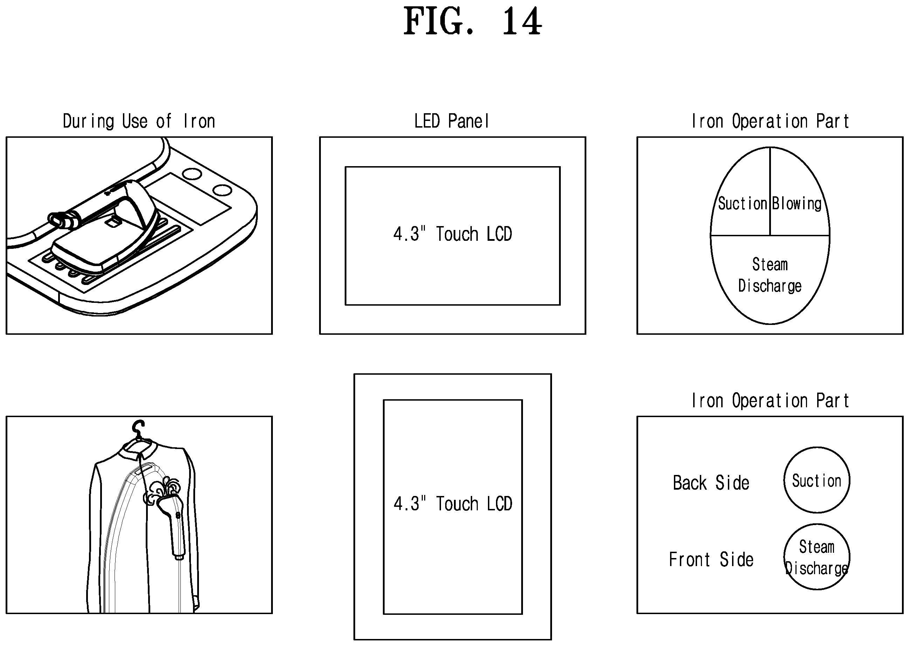

FIG. 14 illustrates an example of screens displayed on the indicator when the iron or the steamer is used.

When the iron 600 is used, the ironing board 100 is generally positioned to be parallel to the ground, and the user uses the iron while standing at a side of the ironing board. Accordingly, for user convenience, the indicator 120 may provide outputs in a horizontal mode.

That is, when the ironing board 100 is parallel to the ground or when an instruction to select the iron 600 is input through the operation part 110, the indicator may provide outputs in the horizontal mode. However, the present disclosure is not limited thereto. The mode of a screen output on the indicator may be changed according to user convenience.

When the steamer 600a is used, the ironing board 100 is generally positioned to be perpendicular to the ground, and the user uses the steamer at a position facing the top surface of the ironing board. Accordingly, the indicator 120 may provide outputs in a vertical mode.

That is, when the ironing board 100 is perpendicular to the ground or when an instruction to select the steamer 600a is input through the operation part 110, the indicator 120 may provide outputs in the vertical mode. However, the present disclosure is not limited thereto. The mode of screens output on the indicator may be changed according to user convenience.

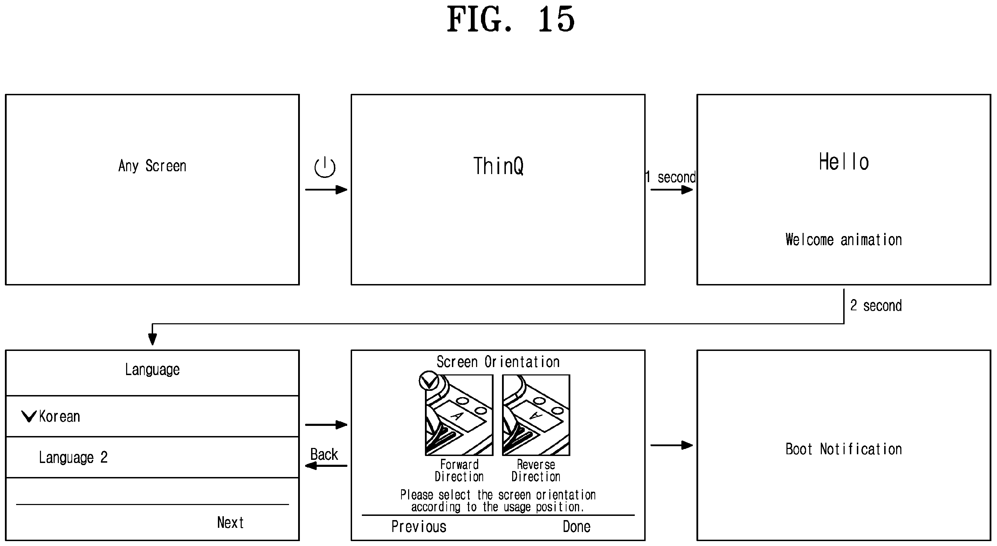

FIG. 15 illustrates screens displayed on the indicator during booting when power is supplied to the ironing system of the present disclosure.

When power is supplied, the indicator 120 may display a notification prompting selection of a language to be used in the ironing system of the present disclosure, and may display a notification prompting selection of a screen orientation according to user convenience.

The notification prompting selection of the language and the screen orientation may be displayed each time power is supplied, or may be displayed only at the time of initial booting.

The position of a screen displayed on the indicator 120 may vary according to a hand used by the user. For example, when the indicator and the iron are positioned on the right side of the user, the position of the screen displayed on the indicator may indicate a forward side. When the indicator and the iron are positioned on the left side of the user, the position of the screen displayed on the indicator may indicate a reverse side. That is, a screen output based on a right-handed user may indicate the forward side, and a screen output based on a left-handed user may indicate the reverse side.

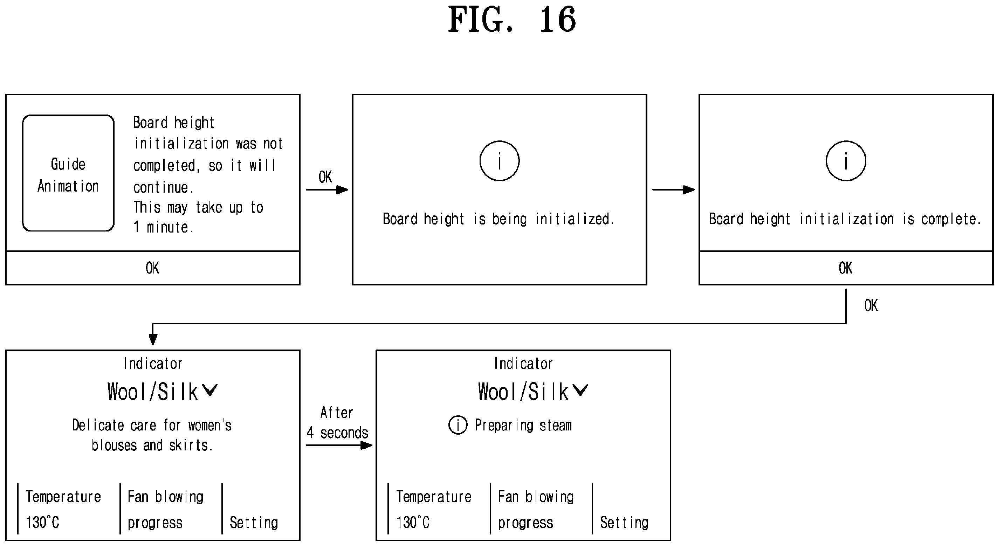

FIGS. 16 to 20 illustrate one embodiment of a settings list of the ironing system according to the present disclosure.

Referring to FIG. 16, the indicator 120 may display a settings list for changing settings of the ironing system of the present disclosure. Any one of the settings in the settings list may be selected by operating the operation part 110.

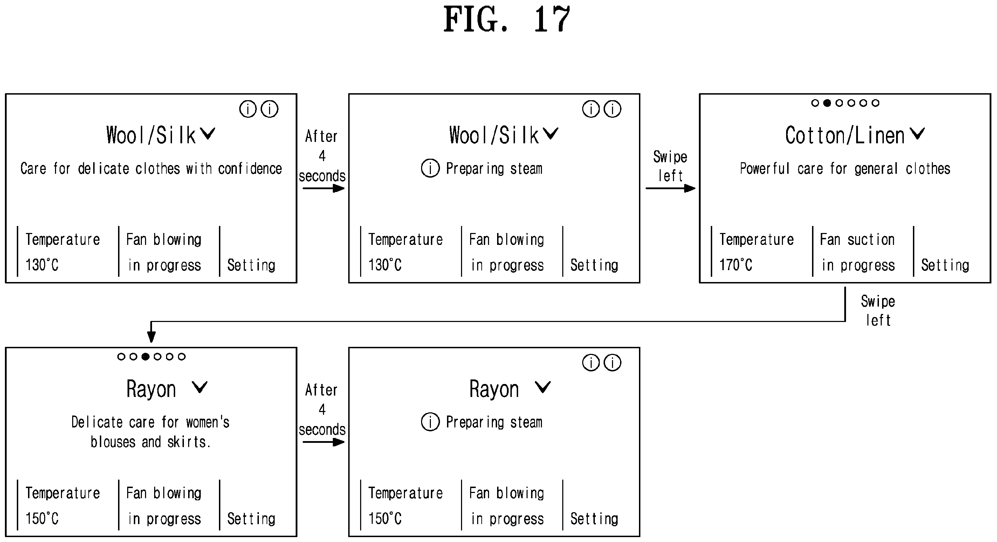

Referring to FIG. 17, an item for adjusting a height of the ironing board 100 may be selected in the settings list through the operation part 110, and the indicator 120 may output a screen for adjusting the height of the ironing board in levels. The height of the ironing board may be adjusted according to a user selection.

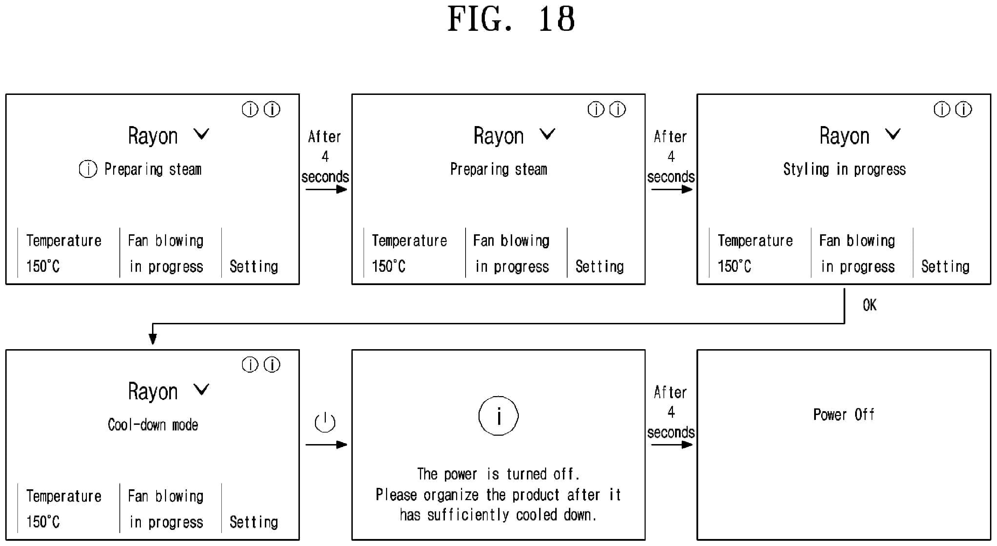

Referring to FIG. 18, an item for fixing the movement part 320 may be selected in the settings list through the operation part 110, and the indicator 120 may output a screen for selecting whether to fix the movement part. In this case, a notification indicating that a certain amount of time is required may be displayed together, and the fixing part 330 may be moved upward or downward according to a user selection.

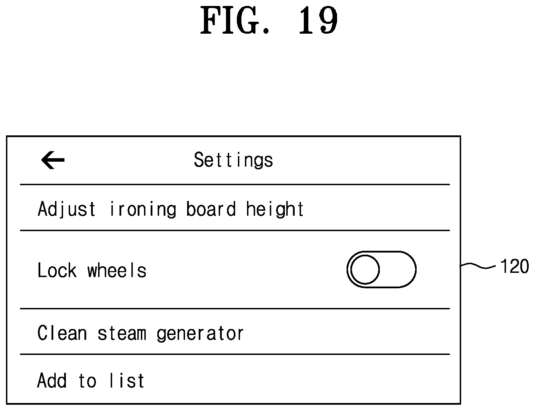

Referring to FIG. 19, an item for cleaning the steam generator 500 may be selected in the settings list through the operation part 110, and the indicator 120 may output a screen notifying that the steam generator is being cleaned. When cleaning of the steam generator is completed, a notification indicating completion of cleaning of the steam generator may be displayed.

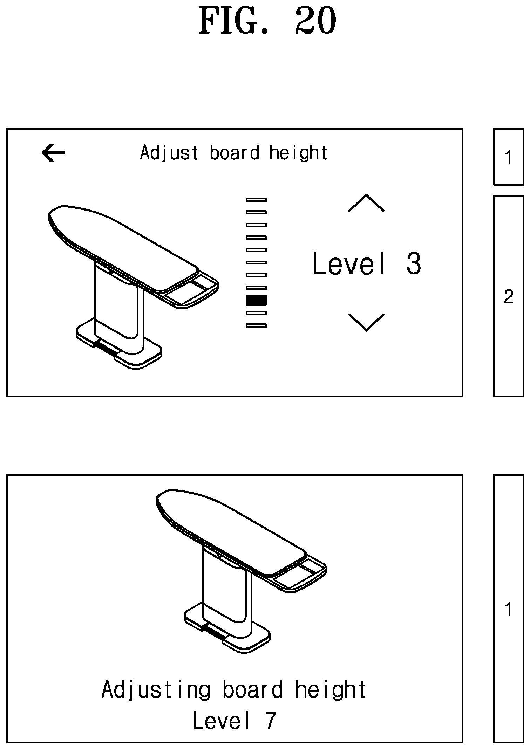

Referring to FIG. 20, an item for changing Wi-Fi settings may be selected in the settings list through the operation part 110, and the indicator 120 may output a screen for selecting whether to connect to Wi-Fi.

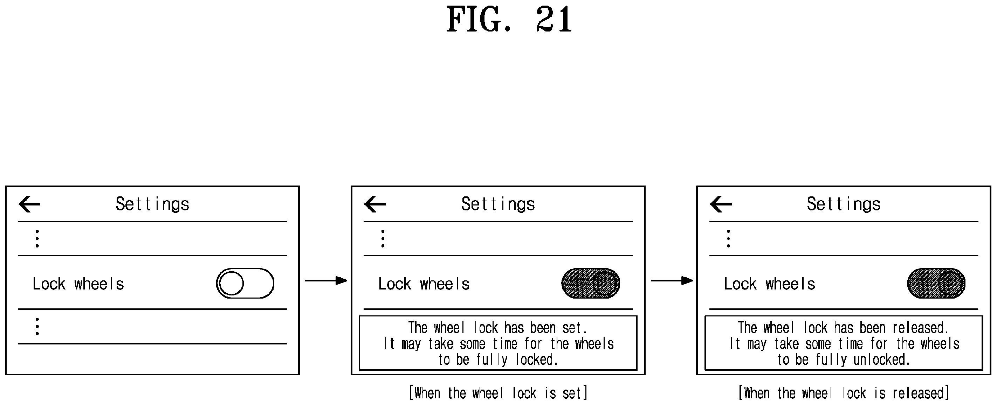

FIG. 21 illustrates a screen on which the indicator displays a notification indicating initialization of the height of the ironing board.

When power of the ironing system of the present disclosure has been cut off with the height of the ironing board 100 adjusted, and then power is supplied again, the height of the ironing board may be adjusted to an initial level, and the indicator 120 may display a notification indicating that the height of the ironing board is being initialized.

When initialization of the height of the ironing board 100 is completed, the indicator 120 may display a notification indicating the completion. Then, after a predetermined time elapses or when a selection for confirming the notification is made, a course selection screen for the iron 600 or the steamer 600a may be output.

The height of the ironing board 100 may be initialized each time power is input to the ironing system of the present disclosure. However, the present disclosure is not limited thereto. The adjusted height may be fixed as a default value such that initialization is not performed.

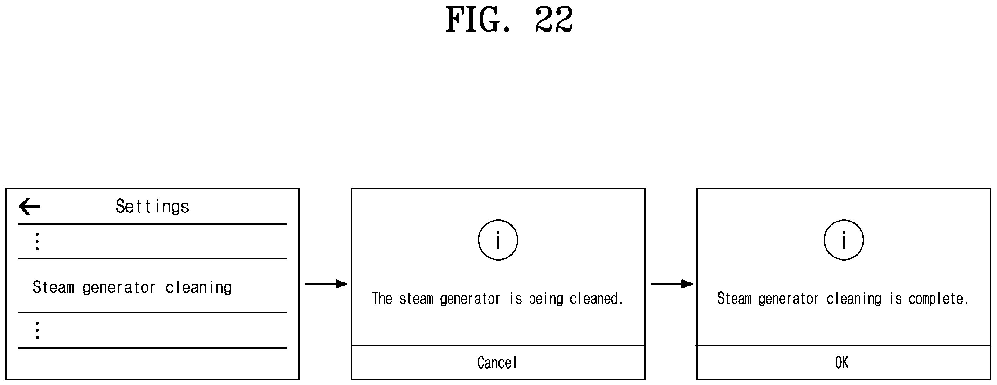

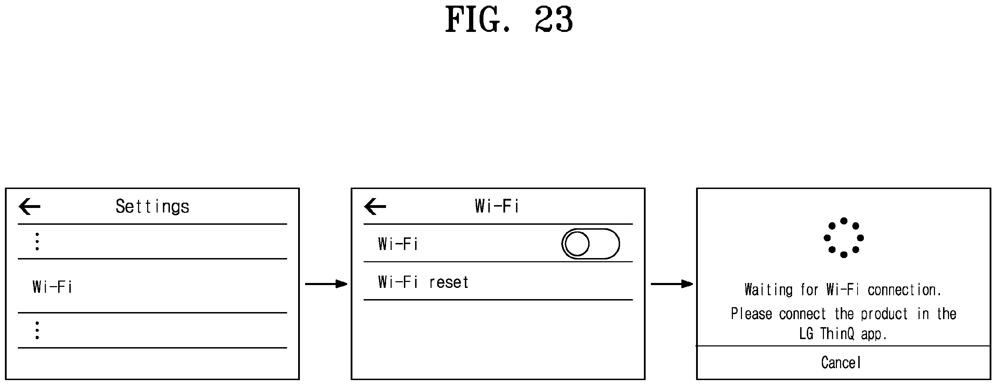

FIGS. 22 and 23 illustrate that the indicator displays a course selection screen and a course progress screen.

Referring to FIG. 22, on the course selection screen, courses may be classified into wool/silk, cotton/linen, rayon, and the like according to a material of clothing. In a case where the indicator and the operation part are integrally provided as a touch panel, a course may be selected through left or right swiping. In a case where the indicator and the operation part are separately provided, a course may be selected by inputting an instruction through the operation part.

According to the selected course, temperature, fan speed, and the like may be set differently, and the indicator 120 may display the temperature, fan speed, and the like for each course, and may display text explaining characteristics of each course.

Referring to FIG. 23, one of the courses may be selected on the course selection screen, and when the course is selected, the indicator 120 may output a course progress screen.

The course progress screen may display a notification indicating a progress stage of the course and a notification indicating a temperature of the course in progress and a fan state.

The notifications indicating the progress stages of the course may include "Preparing steam," "Steam ready," "Styling," and "Cool-down mode."

In the "Preparing steam" stage, the steam generator 500 may heat water to generate steam. In the "Steam ready" stage, steam may be supplied to the iron 600 or the steamer 600a such that steam is discharged when the valve is opened. The "Styling" stage may be a stage of managing clothing by discharging steam or pressing the clothing. The "Cool-down" stage may refer to a stage in which management of the clothing is completed and a blowing fan provided in the ironing board is operated to lower the temperature of the iron or the steamer.

On the course selection screen or the course progress screen, changing the temperature set in the selected course may be restricted in order to prevent damage to the clothing. However, the present disclosure is not limited thereto. A free adjustment course configured to allow a user to arbitrarily adjust settings differently from the set course may be included. In the free adjustment course, the temperature is adjustable.

It will be apparent to those skilled in the art that various modifications and variations may be made in the present disclosure without departing from the spirit and scope of the disclosure. Thus, it is intended that the present disclosure cover the modifications and variations of this disclosure provided they come within the scope of the appended claims and their equivalents.

## Claims

1. An ironing system comprising:
an ironing board having a pressing surface provided to press clothing;
a support body having an upper end joined to a rear surface of the ironing board to support the ironing board;
a base arranged at a lower end of the support body and seated on a ground surface;
a water supplier seated on the base to store water;
a steam generator arranged on the base to receive water from the water supplier to generate steam, the steam generator being spaced apart from the water supplier; and
an iron connected to the steam generator to receive steam from the steam generator, discharge the steam, and press the clothing,
wherein the ironing board is joined to the support body so as to be rotated vertically and horizontally, and
wherein the ironing board comprises:
an operation part provided on a top surface of the ironing board to receive an instruction from a user.

2. The ironing system of claim 1, wherein the operation part is a touch panel.

3. The ironing system of claim 1, wherein the ironing board comprises:
an indicator arranged spaced apart from the operation part and configured to indicate an operation status.

4. The ironing system of claim 1, further comprising:
a lifting support arranged at the lower end of the support body to support a weight of the support body; and
a lifting driver coupled to a rear surface of the lifting support and seated on the base to vary a height of the support body,
wherein the operation part is configured to receive an instruction related to operating the lifting driver to vary the height of the support body.

5. The ironing system of claim 1, wherein the ironing board comprises:
a connector arranged on the rear surface of the ironing board and coupled to an upper end of the support body,
wherein the support body comprises:
a connector accommodation groove provided at the upper end of the support body to accommodate the connector,
wherein the connector comprises:
a connection body having one end rotatably supported by opposite side surfaces of the connector accommodation groove;
a connection shaft having a lower end coupled to an outer circumferential surface of the connection body to move integrally with the connection body;
an ironing board rotary part arranged at an upper end of the connection shaft and coupled to the ironing board to rotate about the connection shaft as a rotation axis; and
a rotation driver configured to provide driving power to rotate the connection body and the ironing board rotary part,
wherein the operation part is configured to receive an instruction related to operating the rotation driver to rotate the ironing board.

6. The ironing system of claim 5, wherein the rotation driver comprises:
a body driver arranged to provide driving power to rotate the connection body; and
a shaft driver arranged to provide driving power to rotate the ironing board rotary part.

7. The ironing system of claim 5, further comprising:
a sensor provided inside the ironing board to sense movement of the ironing board to measure a position of the ironing board.

8. The ironing system of claim 7, wherein the sensor is arranged inclined with respect to the ironing board.

9. The ironing system of claim 8, further comprising:
an elastic member provided inside the ironing board so as to contact the sensor to fix a position of the sensor.

10. The ironing system of claim 9, wherein the elastic member is configured to deform when the ironing board rotates and to be restored to fix the sensor when the ironing board stops.

11. The ironing system of claim 1, wherein the iron comprises:
an iron body defining an exterior of the iron; and
an iron operation part provided on an outer circumferential surface of the iron body to receive an instruction from the user.

12. The ironing system of claim 11, wherein the iron comprises:
an iron sensor configured to sense an inclination of the iron body.

13. The ironing system of claim 1, further comprising:
a steamer connected to the steam generator to receive steam from the steam generator and discharge the steam toward the clothing; and
a housing provided on one surface of the support body and having an accommodating space to accommodate the iron and the steamer.

14. The ironing system of claim 5, wherein the connector accommodation groove is disposed at a central portion of the upper end of the support body,
wherein the connection shaft has one end coupled to a center of the connection body and an opposite end coupled to a center of the ironing board.
